# EUROPÄISCHE PATENTANMELDUNG

(11) **EP 1 666 927 A1**
(43) Veröffentlichungstag der Anmeldung: **07.06.2006**
(21) Anmeldenummer: 04028706.2
(22) Anmeldetag: 03.12.2004
(51) Int. Cl.: G02B 5/22, C03C 17/00

(54) **Sonnenschutzfolie**

(71) Anmelder: Nanogate Advanced Materials GmbH, 66121 Saarbrücken (DE)
(72) Erfinder: Burgard, Detlef Dr., 66333 Völklingen (DE); Danzebrink, Anne, 66119 Saarbrücken (DE); Nass, Rüdiger, 66292 Riegelsberg (DE)
(74) Vertreter: Jönsson, Hans-Peter

(57) **Zusammenfassung**

Die Erfindung betrifft eine Sonnenschutzfolie für transparente oder transluzente Verscheibungen mit mindestens einer metallisierten und/oder unmetallisierten Trägerfolie und mindestens einer Funktionsschicht.

## Beschreibung

Die Erfindung betrifft eine Sonnenschutzfolie für transparente oder transluzente Verscheibungen mit mindestens einer metallisierten und/oder unmetallisierten Trägerfolie und mindestens einer Funktionsschicht.

Normales Glas lässt nicht nur Licht, sondern auch Hitze in den Raum.
Diese Hitze wirkt beispielsweise in Fahrzeugen häufig störend.

Problematisch sind bei Immobilien vor allem sonnenseitige Verglasungen. Schutz bieten hier Sonnenschutzverglasungen oder Sonnenschutzsysteme (Außenjalousien, Markisen und Sonnenschutzfolien), um die Sonnenenergie und somit die Hitze schon am Glassystem zu blocken.

Unter den Sonnenschutzsystemen verändert Folie das Gesamterscheinungsbild des Gebäudes oder Fahrzeugs am wenigsten und ist sicherlich auch die preiswerteste Lösung.

Die bekannten Sonnenschutzfolien sind selbstklebende, transparente Polyesterfilme mit verschiedenen Metallbeschichtungen, welche auf Glasflächen aufgebracht werden, die starke Wärmeeinstrahlung und die Blendung durch die Sonne erheblich vermindern. Sie wirken wie ein reflektierendes Schutzschild. Sonnenschutzfolien werden überall dort eingesetzt, wo durch Glasflächen, in Fenster und Türen oder Überkopfverglasungen, Blendungen und Erwärmungen auftreten können. Das Raumklima oder Fahrzeugklima wird sehr viel gleichmäßiger und damit angenehmer. Das Trägermaterial ist üblicherweise ein Polyesterfilm mit optisch klarer Metallbedampfung oder gesputtert, versehen mit einem Klebstoff. Die Sonnenschutzfolien sind typischerweise chemisch resistent gegen Alkohol, Kohlenwasserstoffe, Ketone, Ester, Alkalien und verdünnte Säuren.

Eine übliche gleichmäßige Aluminumbedampfung reflektiert die einstrahlende Sonnenenergie und lässt kontrastreiches, gedämpftes Licht einfallen. Sonnenschutzfolien reduzieren die ultravioletten Strahlungen und können somit Bleichprozesse verzögern. Bei Glasbruch erhöht die Sonnenschutzfolie durch Splitterbindung die Sicherheit.

Typischerweise werden folgende Messgrößen verwendet, um Sonnenschutzfolien zu charakterisieren:
Der Lichttransmissionsgrad wird normalerweise gemäss DIN EN 410 in einem Bereich von 380 bis 780 nm (DN 65) gemessen und liegt für Sonnenschutzfolien normalerweise unter 40%.
Der Gesamtenergiedurchlass g wird üblicherweise gemäss DIN 4108-3 gemessen und beträgt für Sonnenschutzfolien normalerweise weniger als 1.

Lichtdurchlässigkeit (VLT) wird typischerweise gemäss DIN 67507 in % gemessen und beträgt für Sonnenschutzfolien normalerweise weniger als 40%. Gesetzlich ist jedoch beispielsweise in den USA ein VLT-Wert von wenigstens 35% vorgeschrieben.

Die Selektivitätskonstante ist der Quotient aus Lichtdurchlässigkeit und Gesamtenergiedurchlass und beträgt für Sonnenschutzfolien normalerweise weniger als 1.

Die Lichtreflektivität wird üblicherweise nach der Norm DIN 5036-3 (400-700) gemessen und liegt für Sonnenschutzfolien normalerweise bei über 70%.

Die Farbigkeit (Chroma Wert) ist definiert als C* (CIELAB System, entspricht der Quadratwurzel der Summe (a² + b²), a, b: Messwerte zur Gelb- bzw. Blauverschiebung bezogen auf weiß; C* = "Farbigkeit") und beträgt für Sonnenschutzfolien normalerweise mehr als 5.

Der shading coefficient ist definiert als Gesamtenergiedurchlass g geteilt durch Gesamtenergiedurchlass g einer 3 cm dicken Glasscheibe, welcher per Definition 0,87 beträgt.

Die Trägerfolien bestehen typischerweise aus PET und sind 0,5 bis 1 mm dick. Die Breite der Trägerfolien zumindest für den Fahrzeugmarkt beträgt üblicherweise 155 cm oder mehr.

US 6,383,625 B1 beschreibt eine Sonnenschutzfolie, die in ihrer Funktionsschicht Silikonharz aufweist.

WO 03/050193 A1 beschreibt ein Infrarotabsorptionsmaterial, dass in einen Farbton resultiert, der auf einer x/y-Farbskala innerhalb eines Bereiches für die x-Werte von 0,220 bis 0,205 und innerhalb eines Bereiches für die y-Werte von 0,235 bis 0,325 liegt.

EP 1008564 A1 beschreibt ein infrarotabsorbierendes Material, dass Hexaboride enthält.

US 6,191,884 B1 beschreibt eine infrarotstrahlungabsorbierende Folie, in der die Matrix der Folie aus einem photo-kationisch gebildeten Polymer besteht.

US 6,261,684 B1 beschreibt eine infrarotabsorbierende Folie, in der die infrarotabsorbierende Schicht ITO in einem Bereich von 60 bis 90 Gew.-% enthalten kann.

JP 07100996 A beschreibt einen Infrarotstrahlung absorbierenden Film, in dem eine Schicht organische infrarotabsorbierende Materialien und eine andere Schicht anorganische infrarotabsorbierende Materialien enthält.

EP 1823107 A2 beschreibt eine Beschichtung, die eine Primerschicht aufweist.

Die Aufgabe der vorliegenden Erfindung ist es, eine besonders farbneutrale und nicht zusätzlich spiegelnde Sonnenschutzfolie mit guten Gebrauchs- und Einbaueigenschaften bereitzustellen.

Die der Erfindung zugrunde liegende Aufgabe wird in einer ersten Ausführungsform gelöst durch eine Sonnenschutzfolie für transparente oder transluzente Verscheibungen, umfassend
a) mindestens eine mit wenigstens einer Kleberschicht in flächigem Kontakt befindliche metallisierte oder unmetallisierte Trägerfolie mit einer Dicke von 0,1 bis 500 µm, und
b) mindestens eine Funktionsschicht auf wenigstens einer Hauptfläche der Trägerfolie,
   die Metall enthält, metallisch oder metallfrei ist, und
   - i): Pigment und/oder Farbstoffe enthält,
   - ii): wenigstens ein Infrarot-Strahlung absorbierendes Material enthält,
   - iii): wenigstens ein UV-Strahlung absorbierendes Material enthält,
   - iv): eine Bleistifthärte von wenigstens 3 H aufweist,
   - v): eine Luft- und/oder Sauerstoffdurchlässigkeit J_{LS} bis zu 7,64 X 10¹⁹ kg.m/(m².s.Pa) bei 25 °C aufweist, und/oder
   - vi): eine Wasserdurchlässigkeit J_{W} bis zu 1,1 X 10¹⁵ kg.m/(m².s.Pa) bei 25 °C aufweist.

Bei der Messung der Wasserdurchlässigkeit liegt die Aktivität von Wasser Aw in einem Bereich von 0,4 bis 0,9.

Hierbei weist die Trägerfolie (ohne Kleberschicht) eine Schichtdicke in einem Bereich von 0,1 bis 500 µm auf.

Verscheibung im Sinne der vorliegenden Erfindung umfasst insbesondere Verglasungen von Immobilien, Fahrzeugscheiben (PKW, LKW, Zug, Flugzeug, Straßenbahn, Busse,...) sowie Glasflächen innerhalb von Immobilien, bei denen ein besonderer Wärmeschutz erforderlich ist.

Bevorzugt weist die Sonnenschutzfolie wenigstens zwei Funktionsschichten auf, wobei jede Funktionsschicht sich zur benachbarten Funktionsschicht in mindestens einer Eigenschaft i) bis vi) unterscheidet.

Vorzugsweise umfasst die Sonnenschutzfolie eine Kleberschicht zur Montage der Trägerfolie. Dementsprechend ist diese Kleberschicht eine äußere Schicht der Sonnenschutzfolie, die der flächen Befestigung auf der Verscheibung dient.

Die erfindungsgemäße Sonnenschutzfolie weist vorteilhafterweise keine gesonderte Primerschicht aus. Dadurch kann ein zusätzlicher Prozessschritt eingespart werden und die Produktion kostengünstiger gestaltet werden.

Die Schichtdicke der gesamten Sonnenschutzfolie liegt vorzugsweise in einem Bereich von 5 bis 550 µm, insbesondere in einem Bereich von 5 bis 200 µm.

Vorteilhafterweise kann die Funktionsschicht und/oder die Trägerfolie Farbstoffe, Pigmente, insbesondere Metallpartikel wie Silberpartikel oder Ruß enthalten. Weiterhin können bevorzugt in der Trägerfolie und/oder der Funktionsschicht UV-Absorber enthalten sein, um die Stabilität bei Lichteinstrahlung zu verbessern.

### Funktionsschicht

Vorzugsweise besteht die Matrix der Funktionsschicht(en) vorwiegend aus einem Polymer ausgewählt aus der Gruppe Polyacrylat, PMMA, Polyvinylpyrrolidon (PVP), Polyvinylbutyral (PVB), Polyvinylalkohole (PVA), Polyethylenglycole, Polyurethane, bisphenolbasierte Polymere, Polyepoxide, Siloxan basierten Polymere und Polyester. Diese Polymere können vorteilhafterweise Homopolymere oder Copolymere oder Mischungen dieser Homopolymere und/oder Copolymere von Monomeren sein, die aus der Gruppe ausgewählt sind Vinylmonomere, Acrylate und Epoxide. Gleichermaßen bevorzugt werden als Matrixmaterial UV vernetzende Materialien eingesetzt. Besonders bevorzugt wird Polyacrylat oder Copolymere mit Acrylaten eingesetzt.

Als Ausgangskomponente für die erfindungsgemäßen Polyurethane eignen sich aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

Q(NCO)ₙ

in der n = 2-4, und Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, oder einen aliphatischen Kohlenwasserstoffrest mit 8-15, vorzugsweise 8-13 C-Atomen, bedeuten, z. B. Ethylendiisocyanat, 1,4-Tetramethylendiisocyanat, 1,6-Hexamethylendiisocyanat (HDI), 1,12-Dodecandiisocyanat, Cyclobutan-1,3-diisocyanat, Cyclohexan-1,3- und - 1,4-diisocyanat sowie beliebige Gemische dieser Isomeren, 1-Isocyanato-3,3,5-tri-methyl-5-isocyanatomethyl-cyclohexan, 2,4- und 2,6-Hexahydrotoluylendiisocyanat sowie beliebige Gemische dieser Isomeren, Hexahydro-1,3- und -1,4-phenylen-diisocyanat, Perhydro-2,4'- und -4,4'- diphenyl-methan-diisocyanat, 1,3- und 1,4-Phenylendiisocyanat, 1,4-Duroldiisocyanat (DDI), 4,4'-Stilbendiisocyanat, 3,3'-Dimethyl-4,4'-biphenylendiisocyanat (TODI) 2,4- und 2,6-Toluylendiisocyanat (TDI) sowie beliebige Gemische dieser Isomeren, Diphenylmethan-2,4'- und/oder -4,4'-diisocyanat (MDI), oder Naphthylen-1,5-diisocyanat (NDI) geeignet.

Ferner kommen beispielsweise in Frage: Triphenylmethan-4,4',4"-triisocyanat, Polyphenyl-polymethylen-polyisocyanate, wie sie durch Anilin-Formaldehyd-Kondensation und anschließende Phosgenierung erhalten und z. B. in GB-PS 874 430 und GB-PS 848 671 beschrieben werden, m- und p-Isocyanatophenylsulfonylisocyanate gemäss US-PS 3 454 606, perchlorierte Arylpolyisocyanate, wie sie in US-PS 3 277 138 beschrieben werden, Carbodiimidgruppen aufweisende Polyisocyanate, wie sie in US-PS 3 152 162 sowie in DE-OS 25 04 400, 25 37 685 und 25 52 350 beschrieben werden, Norbornan-diisocyanate gemäss US-PS 3 492 301, Allophanatgruppen aufweisende Polyisocyanate, wie sie in GB-PS 994 890, der BE-PS 761 626 und NL-A 7 102 524 beschrieben werden, Isocyanuratgruppen aufweisende Polyisocyanate, wie sie in US-PS 3 001 9731, in DE-PS 10 22 789, 12 22 067 und 10 27 394 sowie in DE-OS 19 29 034 und 20 04 048 beschrieben werden, Urethangruppen aufweisende Polyisocyanate, wie sie z. B. in der BE-PS 752 261 oder in US-PS 3 394 164 und 3 644 457 beschrieben werden, acylierte Harnstoffgruppen aufweisende Polyisocyanate gemäss DE-PS 12 30 778, Biuretgruppen aufweisende Polyisocyanate, wie sie in US-PS 3 124 605, 3 201 372 und 3 124 605 sowie in GB-PS 889 050 beschrieben werden, durch Telomerisationsreaktionen hergestellte Polyisocyanate, wie sie in US-PS 3 654 106 beschrieben werden, Estergruppen aufweisende Polyisocyanate, wie sie in GB-PS 965 474 und 1 072 956, in US-PS 3 567 763 und in DE-PS 12 31 688 genannt werden, Umsetzungsprodukte der oben genannten Isocyanate mit Acetalen gemäss DE-PS 10 72 385 und polymere Fettsäureester enthaltende Polyisocyanate gemäss US-PS 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt eingesetzt werden die technisch leicht zugänglichen Polyisocyanate, z. B. das 2,4- und 2,6-Toluylendiisocyanat sowie beliebige Gemische dieser Isomeren ("TDI"), 4,4'-Diphenylmethandiisocyanat, 2,4'-Diphenylmethandiisocyanat, 2,2'-Diphenylmethandiisocyanat und Polyphenyl-polymethylen-polyisocyanate, wie sie durch Anilin-Formaldehyd-Kondensation und anschließende Phosgenierung hergestellt werden ("rohes MDI"), und Carbodiimidgruppen, Uretonimingruppen, Urethangrupppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Gut geeignet sind auch Naphthylen-1,5-diisocyanat und Gemische der genannten Polyisocyanate.

Acrylate sind vorzugsweise ausgewählt aus der Gruppe 1,4-Butanediol di(meth)acrylat, 1,6-Hexanediol di(meth)acrylat, Neopentyl glycol di(meth)acrylat, Polyethylene glycol di(meth)acrylat, Neopentyl glycol adipat di(meth)acrylat, Neopentyl glycol hydroxypivalat di(meth)acrylat, Dicyclopentanyl di(meth)acrylat, Dicylopentenyl di(meth)acrylate modifiziert mit Caprolactam, Phosphorsäure di(meth)acrylat modiiziert mit Ethylenoxid, Cyclohexyl di(meth)acrylat modifiziert mit einer Allygruppe, Isocyanurat di(meth)acrylat, Trimethylolpropan tri(meth)acrylat, Dipentaerythritol tri(meth)acrylat, Dipentaerythritol tri(meth)acrylat modifiziert mit Propionsäure, Pentaerythritol tri(meth)acrylat, Trimethylolpropan tri(meth)acrylat modifiziert mit Propylenoxid, Tris(acryloxyethyl) isocyanurat, Dipentaerythritol penta(meth)acrylat modifiziert mit Propionsäure, Dipentaerythritol hexa(meth)acrylat, Dipentaerythritol hexa(meth)acrylat modifiziert mit Caprolactam, (Meth)acrylatestern monofunktionelle (Meth)acrylat, wie etwa Methyl(meth)acrylat, Ethyl(meth)acrylat, Isopropyl(meth)acrylat, 2- Ethylhexyl(meth)acrylat Butyl(meth)acrylat, Cyclohexyl(meth)-acrylat, Tetrahydrofurfuryl(meth)acrylat, 2-Hydroxyethyl(meth)acrylat, 2-Hydroxypropyl(meth)acrylat, Polyethylenglykolmono(meth)acrylat, Methoxypolyethylenglykolmono(meth)acrylat, Polypropylenglykolmono-(meth)acrylat, Polyethylenglykol-polypropylenglykolmono(meth)acrylat, Polyethylenglykol-polytetrtamethylenglykolmono(meth)acrylat und Glycidyl(meth)acrylat; difunktionelle (Meth)acrylat, wie etwa Ethylenglykoldi(meth)acrylat, Diethylenglykoldi(meth)acrylat, Triethylenglykoldi(meth)acrylat, Tetraethylenglykoldi(meth)acrylat, Polyethylenglykoldi(meth)acrylat, Polypropylenglykoldi(meth)acrylat, Neopentylglykoldi(meth)acrylat, Allyl(meth)acrylat, Bisphenol-A-di(meth)acrylat, Ethylenoxid-modifiziertes Bisphenol-A-di(meth)acrylat, Polyethylenoxidmodifiziertes Bisphenol-A-di(meth)acrylat, Ethylenoxid-modifiziertes Bisphenol-S-di(meth)acrylat, Bisphenol-S-di(meth)acrylat, 1,4-Butandioldi(meth)acrylat, und 1,3-Butylenglykol-di(meth)acrylat; und tri- und höherfunktionelle (Meth)acrylat, wie etwa Trimethylolpropantri(meth)acrylat, Glycerintri(meth)acrylat, Pentaerythrit-tri(meth)acrylat, Pentraerythrlt-tetra(meth)acrylat, Ethylen-modifiertes Trimethylolpropantri(meth)acrylat, Dipentaerythrithexa(meth)acrylat, 2-Hydroxyethyl (meth)acrylat, 2-Hydroxypropyl (meth)acrylat, Isobutyl (meth)acrylat, t-Butyl (meth)acrylat, 2-Ethylhexyl (meth)acrylat, Stearylacrylat, 2-Ethylhexylcarbitolacrylat, omega -Carboxypolycaprolactam monoacrylat, Acryloyloxyethylische Säure, Acrylsäuredimer, Lauryl (meth)acrylat, 2-Methoxyethyl acrylat, Butoxyethyl acrylat, Ethoxyethoxyethyl acrylat, Methoxytriethylen glycol acrylat, Methoxypolyethylen glycol acrylat, Stearyl (meth)acrylat, Cyclohexyl (meth)acrylat, Tetrahydrofurfuryl (meth)acrylat, N-vinyl-2-pyrrolidon, Isobornyl (meth)acrylat, Dicyclopentenyl acrylat, Benzyl acrylat, Phenyl glycidyl ether epoxyacrylat, Phenoxyethyl (meth)acrylat, Phenoxy(poly)ethylen glycol acrylat, Nonylphenol ethoxyliertes acrylat, Acryloyloxyethylphthalsäure, Tribromophenyl acrylat, Tribromophenol ethoxyliertes (meth)acrylat, Methyl methacrylat, Tribromophenyl methacrylat, Methacryloxyethylsäure, Methacryloyloxyethylmaleinsäure, Methacryloyloxyethylhexahydrophthalsäure, Methacryloyloxyethylphthalsäure, Polyethylene glycol (meth)acrylat, Polypropylene glycol (meth)acrylat, beta -Carboxyethyl acrylat, N-methylol acrylamide, N-methoxymethyl acrylamide, N-ethoxymethyl acrylamid, N-n-butoxymethyl acrylamid, t-Butyl acrylamide sulfonsäure, vinyl stearate, N-Methyl acrylamid, N-dimethyl acrylamid, N-dimethylaminoethyl (meth)acrylat, N-dimethylaminopropyl acrylamid, Acryloyl morpholin, Glycidyl methacrylat, n-Butyl methacrylat, Ethyl methacrylat, Allyl methacrylat, Cetyl methacrylat, Pentadecyl methacrylat, Methoxypolyethylen glycol (meth)acrylat, Diethylaminoethyl (meth)acrylat, Methacryloyloxyethylbernsteinsäure, Hexanediol diacrylat, Neopentyl glycol diacrylat, Triethylene glycol diacrylat, Polyethylene glycol diacrylat, Polypropylene glycol diacrylat, Pentaerythritol diacrylat monostearat, Glycol diacrylat, 2-Hydroxyethylmethacryloyl phosphat, Bisphenol A ethylen glycol Addukt acrylat, Bisphenol F ethylen glycol Addukt acrylat, Tricyclodecanemethanol diacrylat, Trishydroxyethyl isocyanurat diacrylat, 2-Hydroxy-1-acryloxy-3-methacryloxypropan, Trimethylolpropane triacrylat, Trimethylolpropan ethylenglycol Addukt triacrylat, Trimethylolpropan propylen glycol Addukt triacrylat, Pentaerythritol triacrylat, Trisacryloyloxyethyl phosphat, Trishydroxyethyl isocyanurat triacrylat, modifiziertes epsilon -Caprolactam triacrylat, Trimethylolpropan ethoxy triacrylat, Glycerol propylen glycol Addukt triacrylat, Pentaerythritol tetraacrylat, Pentaerythritol ethylen glycol Addukt tetraacrylat, Ditrimethylolpropan tetraacrylat, Dipentaerythritol hexa(penta)acrylat, Dipentaerythritolmonohydroxy pentaacrylat, Urethane acrylat, Epoxyacrylat, Polyesteracrylat, ungesättiges Polyesteracrylate.

Der Photoinitiator kann vorzugsweise ausgewählt sein aus der Gruppe Benzoin, Benzoin methyl ether, Benzoin ethyl ether, Benzoin isopropyl ether, Benzoin n-butyl ether, Benzoin isobutyl ether, Acetophenon, Dimethylaminoacetophenon, 2,2-Dimethoxy-2-phenylacetophenon, 2,2-Diethoxy-2-phenylacetophenon, 2-Hydroxy-2-methyl-1-phenylpropan-1-on, 1-Hydroxycyclohexyl phenyl keton, 2-Methyl-1-[4-(methylthio)-phenyl]-2-morpholinopropan-1-on, 4-(2-Hydroxyethoxy)phenyl 2-hydroxy-2-propyl keton, Benzophenon, p-Phenylbenzophenon, 4,4'-Diethylaminobenzophenon, Dichlorobenzophenon, 2-Methylanthrachinon, 2-Ethylanthrachinon, 2-tert-Butylanthrachinon, 2-Aminoanthrachinon, 2-Methylthioxanthon, 2-Ethylthioxanthon, 2-Chlorothioxanthon, 2,4-Dimethylthioxanthon, 2,4-Diethylthioxanthon, Benzyl dimethyl ketal, Acetophenon dimethyl ketal and p-Dimethylamin benzoat.

Die erfindungsgemäße Sonnenschutzfolie weist vorteilhafterweise Funktionsschicht(en) auf, die frei von Silikonharz sind, damit die in den Silikonharzen oft enthaltenen Oberflächenaktiven Substanzen nicht auf die Oberfläche des Sonnenschutzfilms gelangen können und somit die Eigenschaften des Sonnenschutzfilms nachteilig beeinflussen können.

Vorzugsweise ist(sind) diejenigen Funktionsschicht(en), die Infrarotabsorbierende Materialien enthalten, frei von Hexaboriden, da der Einsatz von Hexaboriden schon deshalb von Nachteil ist, dass dadurch der übliche Herstellungsprozess der Beimischung von Oxiden um einen weiteren Prozessschritt erweitert werden müsste.

Vorteilhafterweise besteht die Matrix der Funktionsschicht nicht aus einem photo-kationisch gebildeten Polymer. Vielmehr ist es vorteilhaft, dass die Matrix der Funktionsschicht aus einem Polymer besteht, dass beispielsweise anionisch oder radikalisch gebildet ist. Gleichermaßen bevorzugt ist es, wenn die Polymerschicht durch trocknen einer Polymerlösung hergestellt wird.

Die Funktionsschicht(en) enthält(enthalten) vorzugsweise weniger als 60 Gew.-% ITO, insbesondere weniger als 40 Gew.% ITO, da hierdurch eine höhere Transparenz beziehungsweise Lichttransmission erzielt werden kann und die Funktionsschicht dadurch auch wesentlich kostengünstiger hergestellt werden kann.

Die Funktionsschicht(en) enthält(enthalten) vorzugsweise entweder organische Infrarotabsorber oder anorganische Infrarotabsorber.

Die Funktionsschicht(en) weist(weisen) vorzugsweise (jeweils) eine Schichtdicke im Bereich von 100 nm bis 50 µm, insbesondere von 0,2 bis 20 µm auf.

Die Funktionsschicht(en) kann(können) vorteilhafterweise entweder lösungsmittelbasiert oder lösungsmittelfrei hergestellt sein. Das lösungsmittelfreie Herstellungsverfahren hat den besonderen Vorteil, dass es umweltverträglicher ist.

Enthält die mindestens eine Funktionsschicht Metalle und/oder Metallverbindungen und/oder deren Komposite, so ist das Metall bevorzugt ausgewählt aus der Gruppe Sn, Ti, Si, Zn, Zr, Fe, Al, Cr, Co, Ce, In, Ni, Ag, Cu, Pt, Nn, Ta, W, V oder Mo. Die Metallverbindungen sind vorzugsweise Oxide, Nitride, Carbide, Oxinitride und/oder Sulfide dieser Metalle.

Die Sonnenschutzfolie weist vorteilhafterweise eine der Verscheibung abgewandte äußerste Funktionsschicht mit einer Bleistifthärte von wenigstens 3 H, besonders bevorzugt von mindestens 4 H auf. Diese äußerste Funktionsschicht ist vorzugsweise aus Kratzschutzschicht ausgebildet. Ist die äußerste Funktionsschicht als Kratzschutzschicht ausgebildet, so kann diese vorzugsweise überwiegend aus Polymeren der bereits obengenannten Acrylate bestehen oder aus Siliziumverbindungen oder deren Mischungen erhältlich sein, die ausgewählt sind aus der Gruppe Tetramethoxysilan, Tetraethoxysilan, Tetra-n-propoxysilan, Tetraisopropoxysilan, Tetra-n-butoxysilan, Tetraisobutoxysilan, Tetra-sec-butoxysilan, Tetra-tert-butoxysilan, Trimethoxysilan hydrid, Triethoxysilan hydrid, Tripropoxysilan hydrid, Methyltrimethoxysilan, Methyltriethoxysilan, Methyltripropoxysilan, Methyltriisopropoxysilan, Ethyltrimethoxysilan, Ethyltriethoxysilan, Propyltriethoxysilan, Butyltrimethoxysilan, Phenyltrimethoxysilan, Phenyltriethoxysilan, gamma -Glycidoxypropyltrimethoxysilan, gamma - Acryloyloxypropyltrimethoxysilan, gamma -Methacryloyloxypropyltrimethoxysilan, Dimethyldimethoxysilan, Methylphenyldimethoxysilan, Vinyltrimethoxysilan, Vinyltriethoxysilan, Divinyldimethoxysilan und Divinyldiethoxysilan Aminopropyltriethoxysilan.

Infrarotabsorbierende Materialien im Sinne der Erfindung können entweder organisch oder anorganisch sein. Generell sind infrarotabsorbierende Materialien im Sinne der Erfindung solche Materialien, die in einem Wellenlängenbereich von 700 bis 35.000 nm bei den Wellenlängen 1000 nm, 1500 nm, 2000 nm und 3500 nm einen molaren Extinktionskoeffizienten von wenigstens 1,5 l·mol⁻¹·cm⁻¹ aufweisen. Als organisches Infrarot-Strahlung absorbierendes Material wird vorzugsweise ein Material eingesetzt, dass ausgewählt ist aus der Gruppe Phthalocyanine, Naphthalocyanine, Anthrachinone, Cyaninverbindungen, Squalyliumverbindungen, Thiol nickel komplexverbindungen, Triallylmethane, Naphthoqchinone, Anthrachinone und Aminverbindungen wie N,N,N',N'-Tetrakis(p-di-n-butylaminophenyl)-p-phenylenediaminium perchlorat, Phenylenediaminium chlorat, Phenylenediaminium hexafluoroantimonat, Phenylenediaminium fluoroborat, Phenylenediaminium fluorat and Phenylenediaminium perchlorat. Als anorganisches Infrarot-Strahlung absorbierendes Material wird bevorzugt ein Material eingesetzt, dass aus der Gruppe ausgewählt der Metallverbindungen von Sn, Ti, Si, Zn, Zr, Fe, Al, Cr, Co, Ce, In, Ni, Ag, Cu, Pt, Nn, Ta, W, V und Mo. Die Metallverbindungen sind vorzugsweise Oxide, Nitride, Carbide, Oxinitride und/oder Sulfide dieser Metalle. Ganz besonders bevorzugt ist ITO, ATO, SnO₂, TiO₂, SiO₂, ZrO₂, ZnO, Fe₂O₃, Al₂O₃, FeO, Cr₂O₃, Co₂O₃, CeO₂, In₂O₃, NiO, MnO und CuO. Insbesondere bevorzugte Infrarot-Strahlung absorbierende Materialien sind ITO, ATO, TiN oder Zinkoxid. Ein ganz besonders vorteilhaftes Infrarot-Strahlung absorbierendes Material ist ITO.

UV-absorbierende Materialien im Sinne der Erfindung können entweder organisch oder anorganisch sein. Generell sind UV-absorbierende Materialien im Sinne der Erfindung solche Materialien, die in einem Wellenlängenbereich von 100 bis 250 nm bei den Wellenlängen 150 nm und 200 nm einen molaren Extinktionskoeffizienten von wenigstens 1,5 l·mol⁻¹·cm⁻¹ aufweisen. Bevorzugt sind anorganische UV-absorbierenden Materialien wie beispielsweise ITO und/oder ATO. Gleichermaßen bevorzugt sind die organischen UV-absorbierenden Materialien ausgewählt aus der Gruppe Benzotriazolderivate wie 2-(2'-Hydroxy-5'-methylphenyl) benzotriazol, 2-(2'-Hydroxy-3',5'-ditert-butylphenyl) benzotriazol, 2-(2'-Hydroxy-3'-tert-butyl-5'-methylphenyl)-5-chlorobenzotriazol, 2-(2'-Hydroxy-3',5'-ditert-butylphenyl)-5-chlorobenzotriazol und 2-(2'-Hydroxy-3',5'-ditert-amylphenyl) benzotriazol, sowie Benzophenonderivate wie 2,4-Dihydroxybenzophenon, 2-Hydroxy-4-methoxybenzophenon, 2-Hydroxy-4-octoxybenzophenon, 2-Hydroxy-4-dodecyloxybenzophenon, 2,2'-Dihydroxy-4-methoxybenzophenon, 2,2'-Dihydroxy-4,4'-dimethoxybenzophenon and 2-Hydroxy-4-methoxy-5-sulfobenzophenon, and Cyanoacrylatederivate wie 2-Ethylhexyl-2-cyano-3,3'-diphenylacrylat und Ethyl-2-cyano-3,3'-diphenylacrylat.

Die Partikelgröße der anorganischen Materialien, die Infrarot-Strahlung absorbieren, liegt bevorzugt in einem Bereich von 1 bis 20000 nm, und ganz besonders bevorzugt in einem Bereich von 1 bis 2000 nm. Höchst vorteilhaft ist es, wenn die Partikelgröße dieser Infrarot-Strahlung absorbierenden Materialien bis zu 100 nm beträgt. Enthält die Funktionsschicht Metall und auch Oxide, so kann das Metall durch Cosputtern von Metall mit den Oxiden in die Schicht eingebracht werden.

### Trägerfolie

Auch kann die erfindungsgemäße Trägerfolie vorteilhafterweise ein Infrarotstrahlung absorbierendes Material enthalten. Dadurch kann(können) die Funktionsschicht(en) dünner gestaltet werden beziehungsweise weniger mit partikulären Infrarotstrahlung absorbierendem Material beladen werden, um das Lichtstreuverhalten zu minimieren.

Die Trägerfolie besteht vorzugsweise überwiegend aus transparenten Thermoplasten. Als Material eignet sich vorzugsweise ein Material , das ausgewählt ist aus der Gruppe Polyethylen and Polypropylen, Vinyl chlorid Harze, Styrolharze, ABS Harze, Polyvinylalkohol, Acryl Harze, Acrylonitril-Styrol Harze, Vinyliden chlorid Harze, AAS Harze, AES Harze, Polyurethan Harze, Polyvinyl butyral Harze, Poly-4-methylpentene-1 Harze, Polybutene-1 Harze, Vinyliden fluorid Harze, Vinyl fluorid Harze, Fluorkohlenstoff Harze, Polycarbonat Harze, Polyamid Harze, Polyacetal Harze, Polyphenylen oxid Harze, Polyester Harze, wie Polybutylen terephthalat and Polyethylen terephthalat, Polyphenylensulfid Harze, Polyimid Harze, Polysulfon Harze, und Polyallylat Harze. Hierbei eignen sich besonders PET, PC, PMMA, Polyethylen, Polypropylen, Polycarbonat, Acrylpolymer, Methacrylpolymer, Polyvinylchlorid, Polyester, Polyamide, Epoxide und Phenolharz oder auch PE oder PP sowie (poly)zyklische Polyolefine, Polyacetate, -acetale, - amide. Mischungen oder entsprechende Copolymerisate lassen sich auch einsetzen. Besonders bevorzugt besteht die Folie aus PET. Von besonderem Vorteil ist es, wenn eine oder mehrere der Eigenschaften i) bis vi) auch in der Trägerfolie verwirklicht sind.

Ist die Trägerfolie metallisiert, so liegt die Schichtdicke diese Metallisierungsschicht(en) (jeweils) vorzugsweise in einem Bereich von 1 bis 100 nm, insbesondere 5 bis 50 nm. Entscheidend bei der Auswahl der Metallisierungsschicht ist deren Farbe und/oder Reflexion. Besonders bevorzugt wird als Metall für eine Metallisierungsschicht Ti, Fe, Ni, Cr, Edelmetall, höchst bevorzugt Aluminium eingesetzt.

Vorteilhafterweise beträgt die Breite der Trägerfolie mehr als 155 cm, besonders bevorzugt mehr als 175 cm. Die Schichtdicke der Trägerschicht kann vorteilhafterweise auch in einem Bereich von 5 bis 200 µm liegen. Insgesamt liegen in der erfindungsgemäßen Sonnenschutzfolie vorzugsweise mindestens zwei, besonders bevorzugt zwei Trägerfolien vor. Liegen wenigstens zwei Trägerfolien vor, so weist die dem Substrat am nächsten liegende Trägerfolie vorzugsweise eine Schichtdicke von 0,8 bis 1,2 mm auf, während die von dem Substrat weiter entfernten Trägerfolien eine Schichtdicke im Bereich von 0,1 bis 0,7 mm aufweisen.

### Kleberschicht

Die Kleberschicht weist vorteilhafterweise eine Schichtdicke auf, die ein Vielfaches der Rauhigkeit der benachbarten Schichten ist. Besonders bevorzugt liegt die Schichtdicke der Kleberschicht(en) (jeweils) in einem Bereich von 5nm bis 50 µm. Vorteilhafterweise kann die Kleberschicht auch ein IR-absorbierendes Material, insbesondere ITO, aufweisen. Die Kleberschicht besteht vorzugsweise aus einem Material, das ausgewählt ist aus der Gruppe drucksensitive Klebstoffe, hitzesensitive Klebstoffe, und feuchtigkeitssensitive Klebstoffe.

Als drucksensitive Klebstoffe (pressure sensitive adhesives = PSA) eignen sich besonders natürlicher Kautschuk, synthetischer Kautschuk, acrylische-, Polyvinyl ether-, Urethan-, oder Silicon- drucksensitive Klebstoffe; insbesondere Styrolbutadien Kautschuk, Polyisobutylen Kautschuk, Isobutylen-isopren Kautschuk, Isopren Kautschuk, Styrol-isopren block copolymer, Styrol-butadien block copolymer, Styrolethylen-butylen block copolymer, und Ethylen-vinyl acetat elastomer, Copolymere von Acrylsäure, Methylacrylat, Ethylacrylat, Propylacrylat, Butylacrylat, 2-Ethylhexylacrylat, Ethylmethacrylat, Butylmethacrylat, und Acrylonitril, Polyvinylether, Polyvinylisobutylether und Dimethyl polysiloxane.

Als hitzesensitive Klebstoffe können bevorzugt eingesetzt werden Ethylen-vinyl acetat Copolymere, Ethylene-acrylsäureester Copolymere, Phenoxy Harze, Nylon 11, Nylon 12, gesättigte Polyesters, Coumaroninden Harze, Styrol-isopren-styrol Copolymer Kautschuk, Styrolbutadien-styrol Copolymer Kautschuk, Polyethylen Harze, und Polyurethane Harze.

Als feuchtigkeitssensitive Klebstoffe können eingesetzt werden Polyacrylamid, Polyacrylsäure, Polyacrylatester, Polyvinylalkohol, Polyvinylether, Zellulosederivate, und Stärke.

Das Material für die Klebstoffschicht ist vorzugsweise eines der vorgenannten Materialien oder eine Mischung daraus. Dieses Material kann vorteilhafterweise zusätzlich Füllstoffe und andere Hilfsstoffe enthalten.

Besonders bevorzugt sind druckempfindliche Klebstoffe (pressure sensitive adhesives, PSA). Die Kleberschicht, die bei der erfindungsgemäßen Sonnenschutzfolie vorzugsweise außen dem Substrat zugewandt aufgebracht ist, kann vorteilhafterweise eine sogenannte Montagekleberschicht sein, während die übrigen gegebenenfalls in der Sonnenschutzfolie vorhandenen Kleberschichten vorteilhafterweise sogenannte Laminatkleberschichten sind. Die Montagekleberschichten vorzugsweise aus einem anderen Material als die Laminatkleberschichten, damit den speziellen Anforderungen an diese verschiedenen Kleberschichten Rechnung getragen werden kann. So kommt es beispielsweise bevorzugt bei der Montagekleberschicht darauf an, dass diese mit dem Material des Substrats, welches von dem Material der Trägerfolie(n) verschieden sein kann, besonders gut verklebbar ist.

### Optische und thermische Eigenschaften

Vorteilhafterweise liegt der Farbton der erfindungsgemäßen Sonnenschutzfolie auf einer x/y-Farbskala (CIE 1931-Standard) außerhalb eines Bereiches für die x-Werte von 0,220 bis 0,30, insbesondere von 0,220 bis 0,250, und außerhalb eines Bereiches für die y-Werte von 0,235 bis 0,325. Dadurch können unerwünschte Verfärbungen verhindert werden und Farbneutralität sichergestellt werden. Gerade ein Farbstich, wie er mit den obenerwähnten Bereichen beschrieben ist, kann so verhindert werden.

Vorteilhafterweise liegt der Farbton der erfindungsgemäßen Sonnenschutzfolie auf einer x/y-Farbskala (CIE 1931-Standard) innerhalb eines Bereiches für die x-Werte von 0,2 bis 0,45, und innerhalb eines Bereiches für die y-Werte von 0,22 bis 0,4, um eine hohe Farbneutralität zu gewährleisten.

Der Energiedurchlass der erfindungsgemäßen Sonnenschutzfolie g beträgt vorzugsweise bis zu 0,85 gemäß DIN 4108-3, da hierdurch sichergestellt werden kann, dass besonders die Wärmeenergie von der Sonnenschutzfolie effizient abgeschirmt werden kann.

Vorteilhafterweise beträgt die Selektivitätskennzahl der Sonnenschutzfolie wenigstens 1,1 wie oben definiert. Dadurch ist gewährleistet, dass bei hoher Lichtdurchlässigkeit gleichzeitig auch der Energiedurchlass besonders niedrig ist.

Der Chromawert der erfindungsgemäßen Sonnenschutzfolie beträgt vorzugsweise bis zu 2, insbesondere bis zu 1, wie oben definiert. Dadurch ist die erfindungsgemäße Sonnenschutzfolie besonders farbneutral im Vergleich zu den bekannten Sonnenschutzfolien.

Vorzugsweise beträgt die Lichtreflexion bis zu 15%, insbesondere bis zu 10%. Dadurch kann die erfindungsgemäße Sonnenschutzfolie auch in Anwendungen eingesetzt werden, in denen Lichtreflexionen unerwünscht oder sogar nicht erlaubt ist, wie beispielsweise der Einsatz in Frontscheiben von PKW. Um diese geringe Lichtreflexion zu erhalten, liegt in der Sonnenschutzfolie vorteilhafterweise keine Schicht aus Metall vor.

Die Lichttransmission der erfindungsgemäßen Sonnenschutzfolie beträgt im Wellenlängenbereich von 250 bis 700 nm vorteilhafterweise mindestens 70%, insbesondere mindestens 80%. Damit steht die erfindungsgemäße Sonnenschutzfolie im Unterschied zu den bekannten Sonnenschutzfolien auch für Anwendungen zur Verfügung, in denen eine hohe Lichttransmission notwendig oder erwünscht ist.

Die Sonnenschutzfolie weist vorteilhafterweise einen Haze-Wert in einem Bereich von 0,1 bis 4% auf. Dieser Haze-Wert ändert sich nicht signifikant bei Variation der Schichtdicke der Funktionsschicht, die das infrarotabsorbierende Material enthält.

### Ausführungsbeispiele

### Beispiel 1

8 Teile einer Dispersion aus dotiertem Indiumoxid (Nano-ITO C5000; Nanogate Advanced Materials) mit einer Partikelgröße kleiner 100 nm in Toluol, Feststoffgehalt 25 Gew. %, wurden mit 92 Teilen eines PU-Lackes, Feststoffanteil 24 Gew.% gemischt. Nach 5 min. Rühren entstand eine klare Dispersion.
Der wurde Lack mit einer Spiralrakel auf eine 24 µm dicke PET-Folie aufgebracht und 30 min. bei 80 °C getrocknet. Der resultierende Gehalt an Partikeln in der Schicht betrug 1,6 g/m², der Anteil an Partikeln an der Gesamtmasse der Schicht betrug 8,5 Gew.%.

Die Charakterisierung der beschichteten Folie ergab:

| | | |
|---|---|---|
| Lichttransmissionsgrad | τ_{L} | 0,89 |
| Lichtreflexionsgrad | ρᵥ | 0,09 |
| Gesamtenergiedurchlaßgrad | g | 0,82 |
| Shading coefficient | b | 0,94 |
| Selektivitätskennzahl | S | 1,09 |

### Beispiel 2:

30 Teile einer Dispersion aus dotiertem Indiumoxid mit einer Partikelgröße kleiner 100 nm in Toluol, Feststoffgehalt 25 Gew. %, werden mit 70 Teilen eines PU-Lackes, Feststoffanteil 24 Gew.% gemischt. Nach 5 min. Rühren entsteht eine klare Dispersion.
Der wird Lack mit einer Spiralrakel auf eine 24 µm dicke PET-Folie aufgebracht und 30 min. bei 80 °C getrocknet. Der resultierende Gehalt an Partikeln in der Schicht betrug 6 g/m², der Anteil an Partikeln an der Gesamtmasse der Schicht betrug 29 Gew.% .

Die Charakterisierung der beschichteten Folie ergab:

| | | |
|---|---|---|
| Lichttransmissionsgrad | τ_{L} | 0,88 |
| Lichtreflexionsgrad | ρ_{V} | 0,09 |
| Gesamtenergiedurchlaßgrad | g | 0,75 |
| Shading coefficient | b | 0,86 |
| Selektivitätskennzahl | S | 1,17 |

### Beispiel 3

26 g einer Dispersion aus dotiertem Indiumoxid (Nano-ITO C5000; Nanogate Advanced Materials) mit einer Partikelgröße kleiner 100 nm in Toluol, Feststoffgehalt 40 Gew. %, wurden mit 30 g eines PU-Lackes, Feststoffanteil 24 Gew.% gemischt. Nach 5 min. Rühren entstand eine klare Dispersion.
Der Lack wurde mit einer Spiralrakel auf eine 24 µm dicke PET-Folie aufgebracht und 30 min. bei 80 °C getrocknet. Der resultierende Gehalt an Partikeln in der Schicht betrug 15 g/m², der Anteil an Partikeln an der Gesamtmasse der Schicht betrug 57 Gew.%.

Die Charakterisierung der beschichteten Folie ergab:

| | | |
|---|---|---|
| Lichttransmissionsgrad | τ_{L} | 0,84 |
| Lichtreflexionsgrad | ρᵥ | 0,09 |
| Gesamtenergiedurchlaßgrad | g | 0,68 |
| Shading coefficient | b | 0,78 |
| Selektivitätskennzahl | S | 1,24 |

### Beispiel 4:

35 Teile einer Dispersion aus dotiertem Indiumoxid mit einer Partikelgröße kleiner 100 nm in Toluol, Feststoffgehalt 25 Gew. %, werden mit 65 Teilen eines PU-Lackes, Feststoffanteil 24 Gew.% gemischt. Nach 5 min. Rühren entsteht eine klare Dispersion.
Der wird Lack mit einer Spiralrakel auf eine 24 µm dicke PET-Folie aufgebracht und 30 min. bei 80 °C getrocknet. Der resultierende Gehalt an Partikeln in der Schicht betrug 6,5 g/m², der Anteil an Partikeln an der Gesamtmasse der Schicht betrug 36 Gew.% .

Die Charakterisierung der beschichteten Folie ergab:

| | | |
|---|---|---|
| Lichttransmissionsgrad | τ_{L} | 0,87 |
| Lichtreflexionsgrad | ρ_{V} | 0,09 |
| Gesamtenergiedurchlaßgrad | g | 0,73 |
| Shading coefficient | b | 0,84 |
| Selektivitätskennzahl | S | 1,19 |

### Beispiel 5:

34 Teilen eines Hydrolysates aus 3-Glycidyloxypropyltrimethoxysilane und 3-Aminopropyltriethoxysilane in Alkohol wurde mit einem Feststoffgehalt von 9,5 Gew. % wurden 5 Teile einer Dispersion aus dotiertem Indiumoxid mit einer Partikelgröße kleiner 100 nm in N-Butanol, Feststoffgehalt 40 Gew. %, beigemischt. Nach 5 min. Rühren entsteht eine klare Dispersion.
Der wird Lack mit einer Spiralrakel auf eine 50 µm dicke PET-Folie aufgebracht und 30 min. bei 90 °C getrocknet. Der resultierende Gehalt an Partikeln in der Schicht betrug 2,5 g/m², der Anteil an Partikeln an der Gesamtmasse der Schicht betrug 39 Gew.% .

Die Charakterisierung der beschichteten Folie ergab:

| | | |
|---|---|---|
| Lichttransmissionsgrad | τ_{L} | 0,89 |
| Lichtreflexionsgrad | ρᵥ | 0,09 |
| Gesamtenergiedurchlaßgrad | G | 0,78 |
| Shading coefficient | B | 0,89 |
| Selektivitätskennzahl | S | 1,14 |

## Patentansprüche

1. Sonnenschutzfolie für transparente oder transluzente Verscheibungen, umfassend:
a) mindestens eine mit wenigstens einer Kleberschicht in flächigem Kontakt befindliche metallisierte oder unmetallisierte Trägerfolie mit einer Dicke von 0,1 bis 500 µm, und
b) mindestens eine Funktionsschicht auf wenigstens einer Hauptfläche der Trägerfolie,
die Metall enthält, metallisch oder metallfrei ist, und
i) Pigment und/oder Farbstoffe enthält,
ii) wenigstens ein Infrarot-Strahlung absorbierendes Material enthält,
iii) wenigstens ein UV-Strahlung absorbierendes Material enthält,
iv) eine Bleistifthärte von wenigstens 3 H aufweist,
v) eine Luft- und/oder Sauerstoffdurchlässigkeit J_{LS} bis zu 7,64 X 10¹⁹ kg.m/(m².s.Pa) bei 25 °C aufweist, und/oder
vi) eine Wasserdurchlässigkeit J_{W} bis zu 1,1 X 10¹⁵ kg.m/(m².s.Pa) bei 25 °C aufweist.

2. Sonnenschutzfolie gemäß Anspruch 1 umfassend wenigstens zwei Funktionsschichten, wobei jede Funktionsschicht sich zur benachbarten Funktionsschicht in mindestens einer Eigenschaft i) bis vi) unterscheidet.

3. Sonnenschutzfolie gemäß Anspruch 1 umfassend eine Kleberschicht zur Montage der Trägerfolie.

4. Sonnenschutzfolie gemäß Anspruch 1, **dadurch gekennzeichnet, dass** die der Verscheibung abgewandte äußerste Funktionsschicht eine Bleistifthärte von wenigstens 3 H aufweist.

5. Sonnenschutzfolie gemäß Anspruch 1, **dadurch gekennzeichnet, dass** die Funktionsschicht(en) frei von Silikonharz ist(sind).

6. Sonnenschutzfolie gemäß Anspruch 1, **dadurch gekennzeichnet, dass** der Farbton auf einer xy-Farbskala außerhalb eines Bereiches für die x-Werte 0,220 bis 0,3, insbesondere 0,220 bis 0,205, und außerhalb eines Bereiches für die y-Werte von 0,235 bis 0,325 liegt.

7. Sonnenschutzfolie gemäß Anspruch 1, **dadurch gekennzeichnet, dass** die Funktionsschicht, die Infrarotstrahlung absorbierende Materialien enthält, frei von Hexaboriden ist.

8. Sonnenschutzfolie gemäß Anspruch 1, **dadurch gekennzeichnet, dass** die Matrix der Funktionsschichten nicht aus einem photo-kationisch gebildetem Polymer besteht.

9. Sonnenschutzfolie gemäß Anspruch 1, **dadurch gekennzeichnet, dass** die Funktionsschicht(en) weniger als 60 Gew.% Partikel, insbesondere ITO Partikel enthält(enthalten).

10. Sonnenschutzfolie gemäß Anspruch 1, **dadurch gekennzeichnet, dass** die Funktionsschicht(en) entweder organische Infraotabsorber oder anorganische Infrarotabsorber enthält(enthalten).

11. Sonnenschutzfolie gemäß Anspruch 1, **dadurch gekennzeichnet, dass** diese keine gesonderte Primerschicht aufweist.

12. Sonnenschutzfolie gemäß Anspruch 1, **dadurch gekennzeichnet, dass** der Energiedurchlassgrad g bis zu 0,85 beträgt.

13. Sonnenschutzfolie gemäß Anspruch 1, **dadurch gekennzeichnet, dass** die Selektivitätskennzahl wenigstens 1,1 beträgt.

14. Sonnenschutzfolie gemäß Anspruch 1, **dadurch gekennzeichnet, dass** der Chromawert bis zu 2, insbesondere bis zu 1 beträgt.

15. Sonnenschutzfolie gemäß Anspruch 1, **dadurch gekennzeichnet, dass** die Lichtreflexion bis zu 15%, insbesondere bis zu 10% beträgt.

16. Sonnenschutzfolie gemäß Anspruch 1, **dadurch gekennzeichnet, dass** die Lichttransmission in einem Wellenlängenbereich von 250 bis 700 nm mindestens 70%, insbesondere mindestens 80% beträgt.

17. Sonnenschutzfolie gemäß Anspruch 1, **dadurch gekennzeichnet, dass** die Trägerfolie(n) Infrarotstrahlung absorbierendes Material enthält(enthalten).

18. Sonnenschutzfolie gemäß Anspruch 1, **dadurch gekennzeichnet, dass** die Kleberschicht(en) Infrarotstrahlung absorbierendes Material enthält(enthalten).

19. Sonnenschutzfolie gemäß Anspruch 1, **dadurch gekennzeichnet, dass** die Funktionsschicht(en) Infrarotstrahlung absorbierendes Material enthält(enthalten).
